# FASCICULE DE BREVET EUROPEEN

(11) **EP 3 172 042 B1**
(45) Date de publication et mention de la délivrance du brevet: **15.08.2018**
(21) Numéro de dépôt: 15753083.3
(22) Date de dépôt: 26.06.2015
(51) Int. Cl.: B29D 30/06

(54) **MOULE COMPORTANT DES ELEMENTS MOBILES OBTENUS PAR FRITTAGE**
FORM MIT BEWEGLICHEN ELEMENTEN, DIE DURCH SINTERN ERZEUGT WERDEN
MOULD COMPRISING MOBILE ELEMENTS WHICH ARE OBTAINED BY SINTERING

(30) Priorité: 22.07.2014 FR 1457063
(43) Date de publication de la demande: 31.05.2017
(73) Titulaire: Compagnie Générale des Etablissements Michelin, 63000 Clermont-Ferrand (FR)
(72) Inventeur: CALVEL, Romain, F-63040 Clermont-Ferrand Cedex 9 (FR); GUEUGNEAU, Anthony, F-63040 Clermont-Ferrand Cedex 9 (FR)
(74) Mandataire: Demaure, Pierre-Yves
(86) Numéro de dépôt international: PCT/FR2015/051735
(87) Numéro de publication internationale: WO 2016/012683

(56) Documents cités:
- EP-A1- 0 873 851
- EP-A1- 1 125 709
- DE-A1-102004 052 766
- JP-A- 2002 331 527
- US-A1- 2007 187 117
- US-A1- 2008 152 743
- US-B1- 6 454 554

## Description

La présente invention se rapporte à des éléments mobiles disposés dans une garniture. La garniture est constituée de tous les éléments moulants du moule et de leurs supports. Le moule sera plus particulièrement un moule de fabrication de pneumatiques.

Généralement ces éléments mobiles doivent être montés dans la garniture, ce qui nécessite une étape spécifique qui allonge le processus de fabrication. Ceci est d'autant plus critique que les pièces sont de petite taille, car cela contraint à un réglage minutieux qui augmente encore le temps de fabrication et donc son coût. Il faut également prévoir un système de maintien de la pièce dans la garniture afin d'éviter qu'elle ne s'échappe.

Cet élément mobile peut être, par exemple, une lamelle mobile afin de faciliter le démoulage. Plusieurs brevets de l'état de l'art ont souligné le problème de la démoulabilité des lamelles avec d'importantes contre dépouilles, notamment les lamelles avec une goutte d'eau, les lamelles en forme de L ou les lamelles en forme de Y. Il existe donc un besoin de mobilité au niveau de la lamelle elle-même notamment pour faciliter le démoulage. Il existe aussi un besoin de mobilité entre la lamelle et le corps de garniture, dont une légère mobilité pour faciliter le démoulage de sculptures complexes avec par exemple des lamelles inclinées. Il y a également un besoin de modifier l'angle des lamelles (par réglage de la rotation, par bridage, goupillage...) quand on s'aperçoit que l'angle des lamelles sur la sculpture ne donne pas la performance attendue. La création de la lamelle est alors complexe et nécessite un assemblage.

Le document JP 2002331527 - A révèle un moule avec une garniture constituée d'un corps de garniture et d'un élément moulant articulé, comprenant une partie cylindrique et une partie moulante, la partie cylindrique étant placée dans un trou cylindrique disposé dans le corps de garniture.

L'objet de la présente invention comme défini dans la revendication 1, est de proposer un élément mobile fabriqué in situ et qui ne nécessite pas de montage spécifique.

Le moule selon l'invention comprend une garniture constituée d'un corps de garniture et d'au moins un élément moulant articulé par rapport au corps de garniture, ledit corps comprenant une partie cylindrique constituant un axe de rotation X et une partie moulante solidaire de la partie cylindrique, il est caractérisé en ce que la partie cylindrique est placée dans un trou cylindrique disposé dans le corps de garniture réalisé dans un même matériau que l'élément moulant et que ledit élément moulant est d'un seul tenant. L'élément moulant est réalisé in situ d'un seul tenant, soit en une seule pièce, et n'est pas démontable du corps de garniture.

Des formes préférentielles de l'invention sont définies dans les revendications dépendantes 2 à 8.

Avantageusement, le moule comporte des moyens de butée et/ou de bloquage de l'élément moulant. L'élément mobile peut ainsi tourner entre deux ou plusieurs positions selon le type d'articulation prévu et/ou être bloqué dans la position que l'on souhaite.

Avantageusement, le corps de garniture a une surface disposée à l'intérieur du moule et une des butées est perpendiculaire à la surface du corps de la garniture et l'autre est inclinée. Le moule ayant un profil arrondi, ceci permetle moulage de la gomme dans le moule, l'élément moulant est alors positionné de façon inclinée et cela facilite ensuite le démoulage puisqu'alors l'élément moulant peut se mettre dans le sens du démoulage soit perpendiculaire à la surface du moule.

Selon une première variante, le trou cylindrique du corps de garniture et la partie cylindrique de l'élément moulant ont un profil circulaire. L'élément mobile peut ainsi tourner librement sur son axe.

Selon une deuxième variante, le trou cylindrique du corps de garniture et la partie cylindrique de l'élément moulant ont un profil ovale. L'élément mobile a ainsi un débattement limité.

Selon une disposition particulière, l'élément moulant est disposé à l'extrémité d'une lamelle et cette extrémité a une forme extérieure cylindrique. Ainsi l'élément moulant peut tourner autour de l'extrémité de la lamelle. La lamelle présente ainsi une extrémité articulée et autorise un nombre plus important de forme.

Avantageusement, le trou cylindrique du corps de garniture présente un profil fermé et l'élément moulant présente un évidement longitudinal dans lequel passe une partie cylindrique du corps de garniture. La partie cylindrique de l'élément moulant est ainsi emprisonnée dans le corps de garniture.

Selon une autre disposition, l'élément cylindrique se prolonge de part et d'autre par un ergot cylindrique faisant office de charnière. Cet ergot coopère avec un évidement cylindrique dans le prolongement du trou cylindrique afin de maintenir l'élément moulant et de permettre sa rotation.

Avantageusement, la lamelle comprend plusieurs éléments moulants. On obtient ainsi une lamelle présentant des éléments mobiles afin de réaliser différentes formes dans la gomme, comme des formes en T, en Y ou en goutte d'eau, le fait qu'elle soit articulée permet le démoulage. Il est ainsi possible d'obtenir des sillons de forme plus complexe qui soient plus facile à démouler.

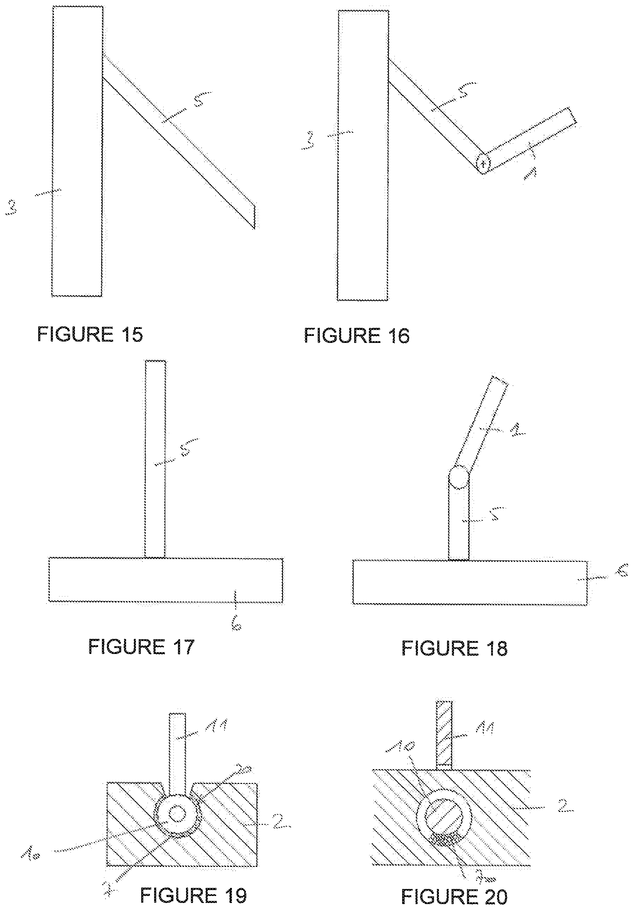

Selon un mode de réalisation, la lamelle a une longueur et une hauteur, et la partie moulante de l'élément moulant est placée parallèlement à la longueur de la lamelle, soit dans le sens de la longueur.. De cette façon, l'élément mobile bouge dans le prolongement de ladite lamelle. Cela permet de tester une autre géométrie de sculpture par exemple (cf figures 15 et 16 en vue de dessus)

Avantageusement la lamelle a une longueur et une hauteur et la partie rectiligne de l'élément moulant est placée perpendiculairement à la longueur de la lamelle, soit dans le sens de la hauteur.. De cette façon, l'élément mobile va bouger dans la hauteur de ladite lamelle. Cela permet de facilité le démoulage ou bien de tester une autre géométrie en profondeur dans la gomme en intégrant un système de blocage (cf figures 17 et 18 en vue de côté)

Le procédé comme défini dans la revendication 9, pour la fabrication d'un élément moulant articulé avec au moins une des caractéristiques précédentes, est caractérisé en ce que le corps de garniture et l'élément moulant sont réalisés d'un seul tenant par frittage laser de poudres. Le frittage laser permet de créer la mobilité d'un seul tenant. Le frittage laser est réalisé avec un jeu entre les pièces, un jeu suffisamment faible pour permettre une légère accroche entre les deux parties mobiles entre elles mais suffisant pour pouvoir se détacher facilement en tirant sur la partie mobile, le jeu est entre 0,05 et 0,5mm. La poudre est soit emprisonnée entre les deux pièces et on souffle pour la retirer, soit la poudre est semi fusionnée en partie basse (le plus souvent à cause de la gravité) par diffusion de la chaleur au niveau du jeu entre les deux pièces lors du frittage et on libère la mobilité en cassant les grains semi fusionnés par une action sur l'élément moulant.

Avantageusement, selon la revendication 10, on laisse une épaisseur de poudre d'au moins 0,1mm non lasée entre l'élément moulant articulé et la garniture ou l'élément de garniture. L'espace où la poudre n'est pas frittée par laser laisse un espace libre entre les pièces qui peuvent ainsi bouger l'une par rapport à l'autre. L'épaisseur de 0,1mm est suffisante pour que si une partie est lasée le lien sera suffisamment faible pour casser facilement lorsque l'on essaiera de bouger une des pièces.

D'autres avantages pourront encore apparaître à l'homme du métier à la lecture des exemples ci-dessous, illustrés par les figures annexées, donnés à titre d'exemple :
- La figure 1 représente une vue en coupe longitudinale d'un élément moulant articulé selon l'invention,
- La figure 2 est une vue en coupe transversale de l'élément moulant articulé de la figure 1,
- La figure 3 est une vue en coupe d'un élément moulant articulé selon une deuxième variante de l'invention,
- La figure 4 est une vue en coupe transversale de l'élément moulant articulé de la figure 3,
- La figure 5 est une vue en coupe d'un élément moulant articulé selon une troisième variante de l'invention,
- La figure 6 est une vue schématique d'une première variante de limitation de l'élément moulant selon l'invention,
- La figure 7 représente une vue schématique d'une deuxième variante de limitation de l'élément moulant selon l'invention,
- La figure 8 est une vue schématique d'une troisième variante de limitation de l'élément moulant selon l'invention,
- Les figures 9 et 10 sont deux exemples de position de l'élément moulant selon l'invention,
- Les figures 11 et 12 sont deux exemples de position de l'élément moulant selon l'invention avec un premier exemple de système de blocage,
- Les figures 13 et 14 sont deux exemples de position de l'élément moulant selon l'invention avec un deuxième exemple de système de blocage,
- Les figures 15 et 16 sont des vues de dessus selon la longueur de la lamelle,
- Les figures 17 et 18 sont des vues selon la hauteur de la lamelle
- La figure 19 est une vue en coupe transversale de l'élément moulant fabriqué selon le procédé
- La figure 20 est une vue en coupe transversale d'un autre type d'élément moulant.
- La figure 21 est une vue de profil d'un moule avec le détail d'une lamelle en position de remplissage,
- La figure 22 est une vue de profil du moule de la figure 21 avec le dértail de la lamelle en position de démoulage

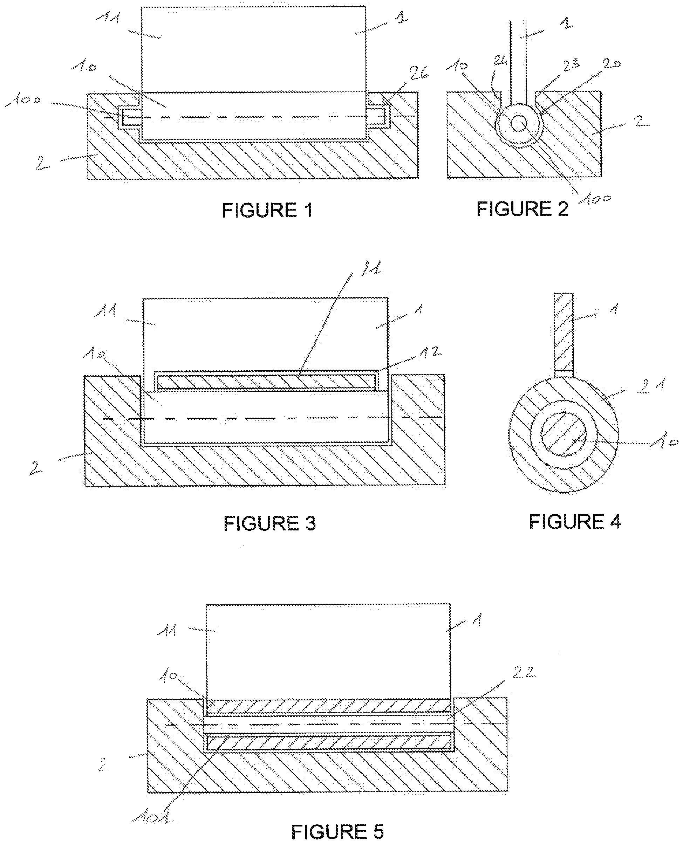

L'exemple illustré figures 1 et 2 montre une garniture comprenant un élément moulant articulé 1 et un corps de garniture 2 dans lequel est percé un trou cylindrique 20. L'élément moulant 1 comprend une partie cylindrique 10 disposée dans le trou cylindrique 20 et une partie moulante 11 qui est ici rectiligne, partant de la partie cylindrique 10. La partie cylindrique 10 tourne autour d'un axe X et présente de part et d'autre, des ergots cylindriques 100 faisant office de charnière et chacun coopérant avec un orifice 26 prolongeant le trou cylindrique 20.

L'exemple des figures 3 et 4 montre un élément moulant articulé où la partie moulante 11 présente un évidement 12 dans lequel une partie périphérique 21 du corps de garniture 2 peut coulisser.

Dans l'exemple de la figure 5, l'élément moulant 1 a une partie cylindrique 10 percée d'un trou 101 et dans lequel passe une tige 22 d'axe X et solidaire de la garniture 2.

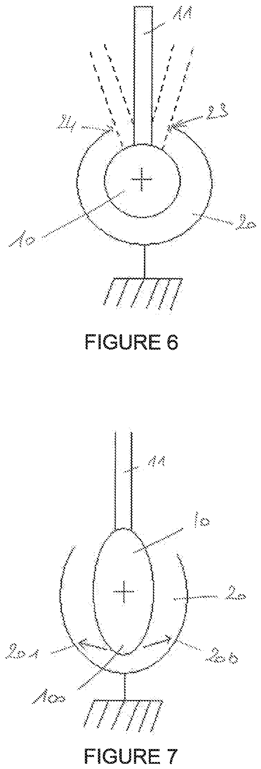

Sur la figure 6, la partie rectiligne 11 est arrêtée entre deux butées 23 et 24 disposées sur une surface de la garniture 2 disposée du coté intérieur du moule.

Sur la figure 7, le trou cylindrique 20 du corps de garniture 2 et la partie cylindrique 10 de l'élément moulant 1 ont un profil ovale ainsi lorsque l'élément moulant 1 tourne la partie la plus longue 100 de la partie cylindrique 10 va venir en butée contre deux cotés 200 et 201 du trou cylindrique 20.

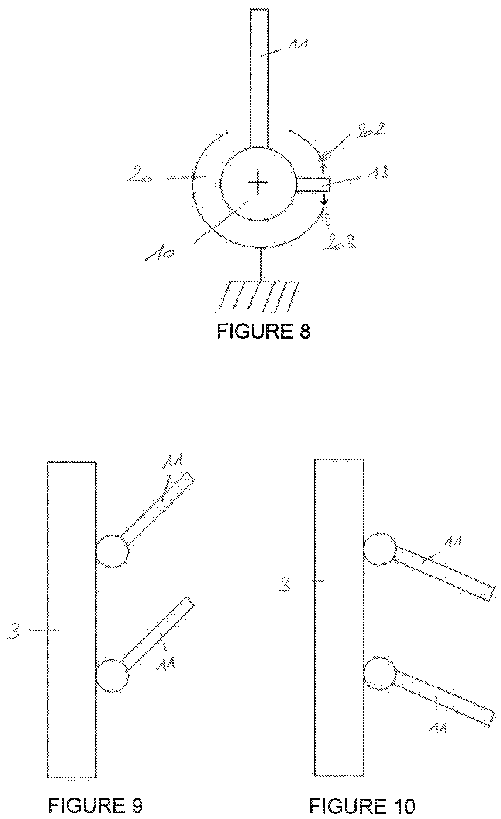

A la figure 8, l'élément moulant 1 présente une contre butée 13 qui va être arrêtée par deux butées 202 et 203 placées à l'intérieur du trou cylindrique 20. Pour une meilleure tenue, il est possible de prévoir plusieurs butées et contre butées à la façon d'un engrenage ou d'un arbre canelé).

Les figures 9 à 18 montrent comment on peut utiliser l'invention dans un moule de fabrication de pneumatique.

La figure 9 illustre un exemple de position de l'élément mobile 1 sur un cordon moulant 3 pour réaliser un sillon d'un pneumatique, la partie moulante 11 de l'élément moulant 1 est ici une lamelle pour mouler une incision dans ledit pneumatique. La figure 10 montre une deuxième position de l'élément moulant 1.

Comme sur la figure 9, les figures 11 et 12, chaque élément mobile 1 est bloqué en rotation par une goupille 4.

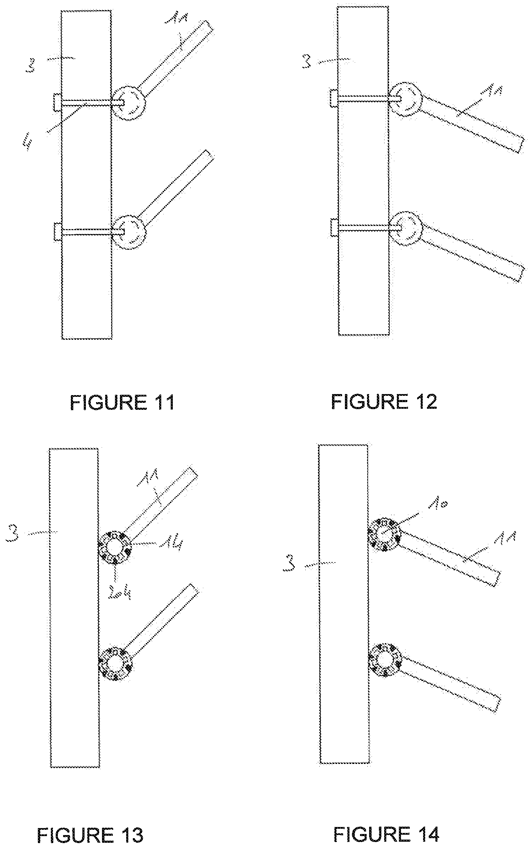

De même les figures 13 et 14, les éléments moulants 1 ont des dents 14 qui sont équivalentes à des contre butées, réparties sur toute la périphérie de la partie cylindrique 10, elles coopèrent avec des butées 204 disposées dans le trou cylindrique 20, l'ensemble constitue un engrenage ou un arbre canelé qui peut être coulissant pour retirer la lamelle puis la réintroduire selon une autre inclinaison qui va permettre le blocage de la partie moulante 11 de l'élément moulant 1.

La figure 15 montre un vue de dessus du cordon moulant 3 dans le moule avec une lamelle 5 réalisé de façon classique. La figure 16 illustre un élément moulant 1 articulé placé au bout de la lamelle 5. De cette façon la sculpture du pneumatique pourra présenter des incisions avec des lignes brisées et on pourra modifier la sculpture en fabrication de pneu, avec un système de blocage.

La figure 17 montre en coupe, un fond du corps de garniture 2 avec une lamelle 5 disposée sur ce fond de façon classique. Sur la figure 18, la lamelle 5 est surmontée d'un élément moulant 1 articulé placé en partie supérieure. Il est ainsi plus facile de démouler le pneumatique puisque l'élément mobile 1 apporte une certaine souplesse à la partie supérieure de la lamelle 5. La lamelle peut comporter un ou plusieurs éléments mobiles de façon à réaliser une lamelle en L ou lamelle Y déjà connues.

La fabrication de l'élément moulant 1 sur le corps de garniture 2 est réalisée d'un seul tenant par frittage laser de poudres. Sur la figure 19, la partie cylindrique 10 est distante par exemple d'environ 0,2mm du trou cylindrique 20, des poudres 7 restent emprisonnées entre la partie cylindrique 10 et le trou cylindrique 20 du corps de garniture après l'opération de frittage laser, elles sont ensuite soufflées pour obtenir l'élément moulant 1 articulé.

Il est aussi possible d'avoir une partie de la poudre semi-fusionnée par la diffusion de la chaleur, ici au niveau inférieur de l'espace entre les deux pièces, cette poudre constitue une fine liaison 70 qui relie la partie cylindrique 10 à l'intérieur du trou cylindrique 20. Cette fine liaison 70 est cassée par une action sur l'élément moulant 1. Dans l'exmple illustré figure 20, lorsque le jeu est trop faible, lors du frittage par diffusion de la chaleur, la liaison est en bas à cause de la gravité qui fait reposer l'élément mobile au fond de la cavité cylindrique.

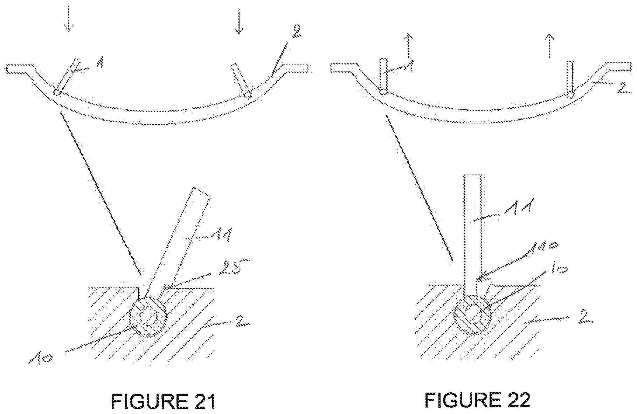

La figure 21 montre un exemple de moule avec sa garniture qui comprend, ici, deux éléments moulants 1 au moment du moulage. Comme on peut le voir le moule a une forme arrondie et les éléments moulants 1 sont par exemple perpendiculaire à la surface de la garniture au moment du moulage puisque les sculptures sont perpendiculaires (par forcément toujours le cas) à la surface du pneumatique. La pression exercé sur les lamelles au moment du moulage de la gomme étant important, les parties moulantes 11 des éléments moulants 1 sont poussés en position inclinée (en butée), un décrochement 110 est prévu par exemple sur un coté de la partie moulante 11 afin de limiter l'inclinaison de l'élément moulant 1. Ce décrochement 110 coopère par exemple avec une élévation 25 de la surface de la garniture 2.

La figure 22 montre le moule de la figure 21 au moment du démoulage. Un fois la gomme durcie ou vulcanisée, comme le démoulage se fait par un mouvement perpendiculaire au moule et non à la surface arrondie de la garniture, l'élément moulant 1 va tourner dans le sens du démoulage pour faciliter celui-ci, c'est-à-dire, ici, verticalement.

D'autres applications de l'élément mobile 1 sont possibles sans sortir du cadre de la présente invention.

## Revendications

1. Moule comprenant une garniture constituée d'un corps de garniture (2) et d'au moins un élément moulant (1) articulé par rapport au corps de garniture, ledit élément moulant (1) comprenant une partie cylindrique (10) constituant un axe de rotation (X) et une partie moulante (11) solidaire de la partie cylindrique (10), la partie cylindrique (10) étant placée dans un trou cylindrique (20) disposé dans le corps de garniture (2) réalisé dans un même matériau que l'élément moulant (1) et ledit élément moulant (1) étant d'un seul tenant.

2. Moule selon la revendication 1 **caractérisé en ce qu'**il comporte des moyens de butée (23, 24, 25) et/ou de bloquage de l'élément moulant (1).

3. Moule selon la revendication précédente **caractérisé en ce que** le corps de garniture a une surface disposée à l'intérieur du moule et qu'une des butées (24) est perpendiculaire à la surface du corps de garniture et l'autre (23) est inclinée.

4. Moule selon une des revendications précédentes **caractérisé en ce que** le trou cylindrique (20) et la partie cylindrique (10) de l'élément moulant (1) ont un profil circulaire.

5. Moule selon une des revendications 1 ou 2, **caractérisé en ce que** le trou cylindrique (20) et la partie cylindrique (10) de l'élément moulant (1) ont un profil ovale

6. Moule selon la revendication 1 **caractérisé en ce que** l'élément moulant (1) est disposé à l'extrémité d'une lamelle (5) et que cette extrémité a une forme extérieure (21) cylindrique.

7. Moule selon une des revendications précédentes, **caractérisé en ce que** le trou cylindrique (20) a un profil fermé et que l'élément moulant (1) présente un évidement longitudinal (12) dans lequel passe une partie cylindrique du corps de garniture.

8. Moule selon une des revendications 1 à 3, **caractérisé en ce que** l'élément cylindrique (10) se prolonge de part et d'autre par un ergot cylindrique (100) faisant office de charnière.

9. Procédé de fabrication d'un élément moulant (1) articulé d'un moule selon une des revendications précédentes, l'élément moulant (1) et le corps de garniture (2) étant réalisés d'un seul tenant par frittage laser de poudres lors de la même opération de fabrication et formant une liaison non démontable.

10. Procédé de fabrication selon la revendication précédente **caractérisé en ce qu'**on laisse une épaisseur de poudre d'au moins 0,1 mm non lasée entre l'élément moulant (1) articulé et le corps de garniture (2).

## Patentansprüche

1. Form, die einen Einsatz enthält, der aus einem Einsatzkörper (2) und aus mindestens einem Formgebungselement (1) besteht, das bezüglich des Einsatzkörpers angelenkt ist, wobei das Formgebungselement (1) einen zylindrischen Teil (10), der eine Drehachse (X) bildet, und einen fest mit dem zylindrischen Teil (10) verbundenen formgebenden Teil (11) enthält, wobei der zylindrische Teil (10) in einem zylindrischen Loch (20) platziert ist, das im Einsatzkörper (2) angeordnet ist, der aus dem gleichen Material wie das Formgebungselement (1) hergestellt ist, und das Formgebungselement (1) aus einem Stück besteht.

2. Form nach Anspruch 1, **dadurch gekennzeichnet, dass** sie Anschlag- und/oder Blockiereinrichtungen (23, 24, 25) des Formgebungselements (1) aufweist.

3. Form nach dem vorhergehenden Anspruch, **dadurch gekennzeichnet, dass** der Einsatzkörper eine im Inneren der Form angeordnete Fläche hat, und dass einer der Anschläge (24) lotrecht zur Fläche des Einsatzkörpers und der andere (23) geneigt ist.

4. Form nach einem der vorhergehenden Ansprüche, **dadurch gekennzeichnet, dass** das zylindrische Loch (20) und der zylindrische Teil (10) des Formgebungselements (1) ein kreisförmiges Profil haben.

5. Form nach einem der Ansprüche 1 oder 2, **dadurch gekennzeichnet, dass** das zylindrische Loch (20) und der zylindrische Teil (10) des Formgebungselements (1) ein ovales Profil haben.

6. Form nach Anspruch 1, **dadurch gekennzeichnet, dass** das Formgebungselement (1) am Ende einer Lamelle (5) angeordnet ist, und dass dieses Ende eine zylindrische Außenform (21) hat.

7. Form nach einem der vorhergehenden Ansprüche, **dadurch gekennzeichnet, dass** das zylindrische Loch (20) ein geschlossenes Profil hat, und dass das Formgebungselement (1) eine Längsaussparung (12) aufweist, in die ein zylindrischer Teil des Einsatzkörpers eindringt.

8. Form nach einem der Ansprüche 1 bis 3, **dadurch gekennzeichnet, dass** das zylindrische Element (10) sich auf beiden Seiten durch einen zylindrischen Zapfen (100) verlängert, der als Scharnier dient.

9. Herstellungsverfahren eines gelenkigen Formgebungselements (1) einer Form nach einem der vorhergehenden Ansprüche, wobei das Formgebungselement (1) und der Einsatzkörper (2) einstückig durch Lasersintern von Pulvern im gleichen Fertigungsvorgang hergestellt werden und eine nicht lösbare Verbindung bilden.

10. Herstellungsverfahren nach dem vorhergehenden Anspruch, **dadurch gekennzeichnet, dass** eine nicht gelaserte Pulverdicke von mindestens 0,1 mm zwischen dem gelenkigen Formgebungselement (1) und dem Einsatzkörper (2) gelassen wird.

## Claims

1. Mould comprising a lining consisting of a lining body (2) and of at least one moulding element (1) that is articulated with respect to the lining body, the said moulding element (1) comprising a cylindrical part (10) constituting a rotation axis (X) and a moulding part (11) secured to the cylindrical part (10), the cylindrical part (10) being placed in a cylindrical hole (20) arranged in the lining body (2) made from the same material as the moulding element (1), and the said moulding element (1) being of one piece.

2. Mould according to Claim 1, **characterized in that** it comprises means (23, 24, 25) for the abutment and/or immobilization of the moulding element (1).

3. Mould according to the preceding claim, **characterized in that** the lining body has a surface arranged inside the mould and **in that** one of the abutments (24) is perpendicular to the surface of the lining body and the other (23) is inclined.

4. Mould according to one of the preceding claims, **characterized in that** the cylindrical hole (20) and the cylindrical part (10) of the moulding element (1) have a circular profile.

5. Mould according to one of Claims 1 and 2, **characterized in that** the cylindrical hole (20) and the cylindrical part (10) of the moulding element (1) have an oval profile.

6. Mould according to Claim 1, **characterized in that** the moulding element (1) is arranged at the end of a sipe blade (5) and **in that** this end has a cylindrical exterior shape (21).

7. Mould according to one of the preceding claims, **characterized in that** the cylindrical hole (20) has a closed profile and **in that** the moulding element (1) has a longitudinal recess (12) that a cylindrical part of the lining body enters.

8. Mould according to one of Claims 1 to 3, **characterized in that** the cylindrical element (10) is extended on each side by a cylindrical spigot (100) that acts as a hinge.

9. Method of manufacturing an articulated moulding element (1) of a mould according to one of the preceding claims, the moulding element (1) and the lining body (2) being produced as a single piece by powder laser sintering during one and the same manufacturing operation and forming a non-separable connection.

10. Method of manufacture according to the preceding claim, **characterized in that** an at least 0.1 mm thickness of non-fused powder is left between the articulated moulding element (1) and the lining body (2).
